(19) Europäisches Patentamt / European Patent Office / Office européen des brevets

(11) **EP 2 806 187 A1**

(12) **DEMANDE DE BREVET EUROPEEN**

(43) Date de publication:
**26.11.2014 Bulletin 2014/48**

(51) Int Cl.:
*F16H 7/12* *(2006.01)*  *F16H 7/14* *(2006.01)*

(21) Numéro de dépôt: **14164905.3**

(22) Date de dépôt: **16.04.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **24.05.2013 FR 1354673**

(71) Demandeur: **PEUGEOT CITROËN AUTOMOBILES SA**
**78140 Velizy-Villacoublay (FR)**

(72) Inventeurs:
• **Berger, Julien**
  **75019 Paris (FR)**
• **Leborgne, Corentin**
  **78120 Rambouillet (FR)**
• **Hackspille, Christophe**
  **95610 Eragyn sur Oise (FR)**

(54) **Moteur a combustion de vehicule automobile a tendeur de courroie adaptatif**

(57) L'invention concerne un moteur à combustion de véhicule automobile comprenant un module pilotant un actionneur (51,52,53) de positionnement du tendeur (5) de courroie, le module étant configuré pour comparer un déplacement du tendeur (5) avec un effort produit par l'actionneur (51,52,53) et pour déduire de cette comparaison un paramètre indicatif d'une élasticité de la courroie et/ou un paramètre indicatif d'une longueur de la courroie (4).

Figure unique

EP 2 806 187 A1

**Description**

L'invention concerne les moteurs à combustion de véhicule automobile et en particulier les systèmes d'entrainement reliant un arbre moteur à un alternateur, un démarreur, un alterno-démarreur du véhicule, ou encore d'autres accessoires comme par exemple une pompe à eau.

L'invention concerne notamment les groupes motopropulseurs de type hybride par exemple à électricité et hydrocarbure ou encore les groupes motopropulseurs de type STT pour Start and Stop selon la terminologie anglo-saxonne, c'est-à-dire à arrêt et démarrage automatique à l'immobilisation complète ou non du véhicule.

Un alterno-démarreur est un organe réversible, susceptible d'agir en organe passif ou en organe d'entrainement. De ce fait, un alterno-démarreur est connu pour nécessiter une courroie d'entrainement particulièrement sollicitée et donc sujette à des oscillations longitudinales et transversales particulièrement élevées.

Afin de limiter de telles oscillations, qui seraient susceptibles de limiter la durée de vie de la courroie ou même de générer des bruits ou vibrations bruyantes et sources d'usures prématurées, on a pour habitude de positionner au moins un tendeur appuyant transversalement sur la courroie. De tels tendeurs peuvent être équipés d'un actionneur lequel positionne un galet du tendeur d'une manière plus ou moins avancée contre la courroie.

De tels tendeurs à positionnement variable ont tendance à occasionner une usure de la courroie qu'il est souhaitable de prévoir afin de corriger un éventuel défaut de courroie. Il est en outre souhaitable de pouvoir utiliser un tel tendeur à positionnement variable pour pallier à d'éventuels écarts de longueur de la courroie dus à une variabilité dans le processus de production de la courroie.

Le but de l'invention est d'apporter une solution à ce problème en permettant de prévoir une usure de la courroie et/ou d'évaluer un écart dimensionnel originel de la courroie.

Ce but est atteint selon l'invention grâce à un moteur à combustion de véhicule automobile comprenant un arbre moteur, un accessoire tournant électrique, une courroie reliant l'arbre moteur à l'accessoire tournant électrique, un tendeur de courroie comprenant un actionneur de positionnement du tendeur de manière à exercer un appui sur la courroie qui est variable selon le positionnement du tendeur de courroie, caractérisé en ce qu'il comporte un module pilotant l'actionneur de positionnement du tendeur, le module étant configuré pour comparer un déplacement du tendeur avec un effort produit par l'actionneur pour générer un tel déplacement et pour déduire de cette comparaison un paramètre indicatif d'une élasticité de la courroie et/ou un paramètre indicatif d'une longueur de la courroie.

Ce qui est extrêmement avantageux dans la présente invention, c'est qu'elle atteint son but sans nécessiter de capteur spécifique : on peut ainsi suivre l'usure de la courroie et évaluer un écart dimensionnel par rapport aux dimensions initiales de la courroie avec un minimum de moyens techniques, en exploitant les informations issues de l'actionneur du tendeur de la courroie.

En outre, le pilotage de l'actionneur peut ainsi se faire en boucle ouverte (sans mesure en continu). En évitant ainsi une régulation en boucle fermée, on peut diminuer la charge du calculateur du module de pilotage.

Avantageusement, le module pilotant l'actionneur de positionnement du tendeur est configuré pour appliquer un déplacement prédéfini du tendeur, mesurer une consommation d'énergie électrique pour appliquer le déplacement prédéfini, et en déduire un paramètre indicatif de l'élasticité de la courroie à partir de la consommation d'énergie électrique mesurée.

Avantageusement, le module pilotant l'actionneur de déplacement du tendeur est configuré pour comparer la consommation d'énergie électrique pour appliquer le déplacement prédéfini avec une consommation électrique de référence et en déduire le paramètre indicatif de l'élasticité de la courroie.

Avantageusement, le module pilotant l'actionneur de déplacement du tendeur est configuré pour appliquer une tension de courroie consistant en une valeur de consigne corrigée d'une valeur corrective, le module déduisant la valeur corrective d'un paramètre indicatif d'élasticité de la courroie déduit de la comparaison entre le déplacement du tendeur et l'effort produit par l'actionneur pour générer un tel déplacement.

Avantageusement, le module pilotant l'actionneur de déplacement du tendeur est configuré pour déterminer un déplacement du tendeur à appliquer pour atteindre une valeur de tension de courroie consistant en la tension de consigne corrigée de la valeur corrective en déterminant le déplacement du tendeur à appliquer par utilisation d'une table indiquant des valeurs de déplacement à appliquer en fonction de valeurs de tension souhaitées dans la courroie.

Avantageusement, le moteur présente un module configuré pour comparer une valeur de déplacement à appliquer au tendeur avec une valeur maximale, le module étant configuré pour émettre un signal de mise en garde du conducteur lorsque la valeur de déplacement à appliquer au tendeur dépasse la valeur maximale.

Avantageusement, le signal de mise en garde du conducteur est un signal d'invitation à changer la courroie.

Avantageusement, le module pilotant l'actionneur de déplacement du tendeur (5) est configuré pour déterminer un écart de dimensionnement de la courroie à son installation sur le moteur par rapport à une dimension de courroie attendue et le module est configuré pour mettre en oeuvre un déplacement du tendeur qui est corrigé en fonction de l'écart de dimensionnement déterminé.

Avantageusement, le tendeur comporte un bras rotatif et un galet porté par le bras rotatif.

Avantageusement, le module pilotant l'actionneur de déplacement du tendeur est configuré pour piloter des déplacements du tendeur vers des positionnements définissant une plage de déplacements possibles qui est continue.

Avantageusement, le tendeur est un tendeur à mouvement rectiligne.

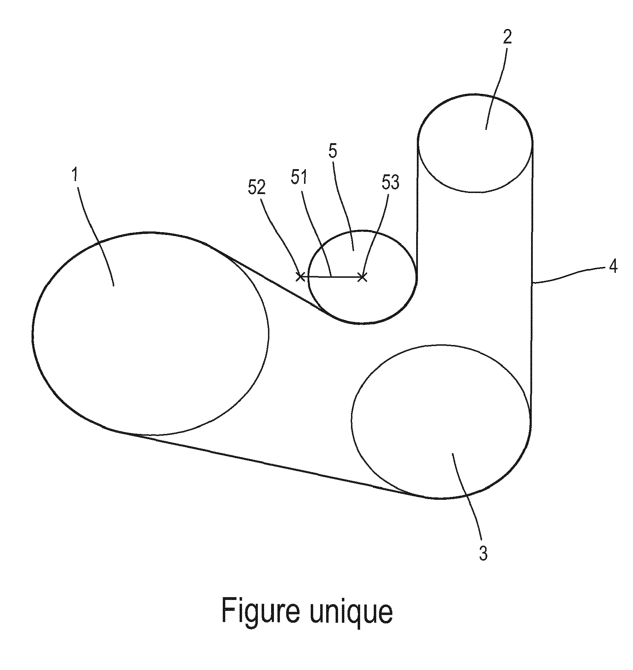

D'autres caractéristiques, buts et avantages de l'invention apparaitront à la lecture de la description qui va suivre, faite en référence à la figure unique annexée qui est une vue schématique d'une façade d'entrainement d'accessoires d'un moteur comprenant un galet tendeur adaptatif, selon un mode de réalisation de l'invention.

La façade d'entrainement d'accessoires de la figure annexée comporte une poulie de vilebrequin 1, une poulie d'alternateur réversible 2 et une poulie de compresseur de climatisation 3. L'entrainement des accessoires, notamment en mode accessoire, est assuré par une courroie 4 laquelle est ici une courroie de type poly-vé mais qui peut être de tout autre type. Le moteur décrit ici présente un fonctionnement où la poulie d'alternateur 2 est sélectivement passive ou motrice. Le présent moteur est utilisable dans une application STT ou dans une application hybride par exemple de type mild-hybride, c'est-à-dire un véhicule équipé d'un système STT et d'un système de récupération d'énergie au freinage. La poulie 2 de l'alternateur réversible devient alors typiquement la poulie motrice dans les phases de redémarrage, les phases d'assistance électrique à la motricité et/ou les phases de roulage électrique.

L'enroulement de la courroie 4 sur les poulies 1, 2 et 3 et la tension de pose de la courroie 4 est assurée par un galet tendeur 5 comportant un bras articulé 51. Sur la figure annexée, le bras articulé 51 est ancré par une extrémité sur un point de levier fixe 52 et l'axe de rotation du galet tendeur 5, mobile, est référencé 53. En variante, le tendeur est un tendeur à mouvement linéaire ou à mouvement rectiligne, le tendeur comportant un galet d'appui sur la courroie et un actionneur lequel actionneur entraine le galet selon un mouvement rectiligne.

Cette façade accessoires a la particularité de pouvoir moduler la tension de pose de la courroie via un mécanisme qui permet de déplacer l'axe 53 du galet du tendeur. Ce déplacement permet d'augmenter ponctuellement les performances en termes de transmission de puissance de la façade accessoires. Plusieurs types de pilotage de cet actionneur peuvent être envisagés. Ainsi, le pilotage peut être un pilotage à deux positions, trois positions ou même un pilotage permettant de régler la position du galet du tendeur sur une plage continue de positions.

Soit $\alpha$ l'angle formé par le bras 51 entre sa position actuelle et sa position de repos. L'augmentation de l'angle $\alpha$ va entrainer une augmentation de la longueur de la courroie 4 et donc une augmentation de tension de brin. La force appliquée et l'élongation sont proportionnelles et reliées par la relation suivante :

$$F = E \cdot A \cdot \frac{\Delta L}{L}$$

Où E est le module de Young du matériau de la courroie, A est la section de la courroie, L est la longueur totale de la courroie, $\Delta L$ est l'allongement de la courroie.

Nous avons donc une relation linéaire qui est fonction de la nature du matériau entre l'allongement et la force nécessaire pour un tel allongement. Un tel système permet d'augmenter la tension de pose de telle sorte que les sollicitations de la courroie vont être nettement augmentées. La durée de vie de la courroie va cependant avoir tendance à se dégrader plus rapidement et il est avantageux de surveiller l'usure de la courroie pour moduler sa sollicitation ou anticiper des mesures préventives telles que le remplacement de la courroie ou la réalisation d'un entretien anticipé. De plus l'élasticité naturelle de la courroie va évoluer avec l'usure, la courroie devenant d'autant plus souple qu'elle sera vieillie. Ainsi, le module de Young de la courroie va évoluer, typiquement diminuer avec l'usure de la courroie alors que la courroie sera de plus en plus souple en élasticité.

Plusieurs types de pilotage d'un tel tendeur adaptatif sont possibles. Un premier type de pilotage est un pilotage multi-positions. Dans ce type de pilotage, le tendeur 5 permet d'atteindre un nombre fini de positions angulaires $\alpha_i$ avec i le nombre de positions prédéfinies. Un deuxième type de pilotage est un pilotage continu. Le tendeur 5 peut dans ce cas atteindre une infinité de positions angulaires entre une position angulaire minimale $\alpha_{min}$ et une position angulaire maximale $\alpha_{max}$.

L'allongement et l'usure de courroie vont causer deux types de problèmes. A partir d'un certain degré d'usure, pour le tendeur à multi-positions, la tension maximale dans les brins ne permet plus d'assurer la fonction de transmission de couple. Il est donc alors nécessaire de remplacer la courroie usée par une courroie neuve. Pour le tendeur continu, à partir d'un certain degré d'usure la loi de commande supposée ajuster la position du tendeur 5 en fonction du juste besoin n'est plus calée correctement du fait de l'usure de la courroie. Il est donc possible de recaler la loi de commande et si la loi de commande atteint la position maximale, alors à ce moment-là il devient nécessaire de changer la courroie usée. En outre, la dispersion moyenne des longueurs de courroies d'accessoires est typiquement de plus ou moins 4mm. Pour une courroie de longueur nominale de 1020mm et ayant une élasticité de 120.000 N/m, la dispersion des longueurs des courroies va entrainer une dispersion de tension de plus ou moins 470 N pour une position de tendeur constante. Un dispositif de mise en position du tendeur mécanique va s'accompagner avantageusement dans le présent exemple de réalisation d'un correctif prenant compte de la dispersion des longueurs des courroies.

En fonction de la géométrie de la façade d'entrainement des accessoires, la courroie fait l'objet d'une loi de pilotage indiquant la tension de la courroie en fonction de la position angulaire du bras 51. La loi reliant la tension de pose de courroie utile et la position angulaire va dépendre principalement de la définition géométrique de la façade d'accessoires, notamment des positions des poulies et des diamètres des poulies.

La tension de courroie souhaitée est déterminée en fonction du couple à transmettre par la façade d'accessoires. La tension de courroie nécessaire peut également dépendre du régime de rotation de la courroie et donc du moteur. On considère ici une tension de courroie qui est fonction du couple généré par ou appliqué à la machine électrique constituée par l'alterno-démarreur et qui est fonction également du régime du moteur thermique. Cette dépendance de la tension de courroie vis-à-vis de ces deux paramètres est par exemple exprimée dans une cartographie. On note que la tension nécessaire peut être différente pour une même valeur de couple selon que la machine électrique est en mode de fonctionnement positif ou négatif.

Cette tension de pose idéale est une position idéale du tendeur 5 ne tenant pas compte de l'état d'usure de la courroie et de l'éventuelle dispersion de la longueur de courroie par rapport à la longueur de courroie nominale.

Le tendeur 5 est ici piloté à intervalle de temps régulier de manière à mesurer l'élasticité de la courroie. Cette procédure peut avoir lieu avant la mise en route du moteur thermique ou après son arrêt. La température de la courroie peut avoir une influence non négligeable sur les résultats de cette procédure. Ainsi, pour une procédure de mesure de tension après un arrêt moteur, il est avantageux de corriger la tension mesurée avec la température de la courroie elle-même mesurée ou calculée.

L'actionneur électrique du tendeur 5 est ici piloté de manière à mesurer l'intensité consommée par l'actionneur pendant un déplacement sur une course angulaire préprogrammée, ce qui va permettre d'estimer l'usure de la courroie.

Selon le niveau d'usure estimé, un module de pilotage de l'actionneur réalise alors ici l'une des deux actions suivantes. Si le niveau d'usure de la courroie est trop important pour assurer les fonctions de la façade accessoires, alors il est nécessaire de remplacer la courroie et un signal est envoyé par le module de pilotage à l'attention du conducteur pour l'inviter à un entretien de son véhicule. A noter que cette option est la seule possible dans le cas d'un tendeur à deux positions pour lequel on constate un manque de tension dans la position tendue. Si le niveau d'usure ne remet pas en cause le fonctionnement de la façade accessoires, la position de consigne $\alpha$ du tendeur 5, notamment lorsqu'il s'agit d'un tendeur continu, est corrigée en utilisant une valeur $\Delta T$ de correction de tension à appliquer.

Dans le présent mode de réalisation, le module de pilotage présente deux sous-modules consécutifs. Le premier sous-module fournit une tension à appliquer à la courroie en fonction du régime moteur et du couple de consigne du moteur. Le deuxième sous-module fournit une valeur de positionnement angulaire de consigne $\alpha_{consigne}$ à partir de la valeur de la tension à appliquer et d'une loi indiquant la tension apparaissant dans la courroie en fonction de la position du tendeur. Avantageusement, le correctif de tension $\Delta T$ est injecté entre les deux sous-modules, de sorte que le deuxième sous-module prend en compte une tension de courroie corrigée pour identifier la position angulaire à adopter.

Lorsque la valeur de positionnement angulaire de consigne $\alpha_{consigne}$ est supérieure à une valeur $\alpha_{max}$, cela signifie que la courroie est trop détendue pour assurer le transfert de couple et donc qu'il faut la remplacer pour une courroie neuve.

Ce dispositif permet naturellement et sans opération complémentaire de corriger l'écart de tension dû à un écart de longueur de courroie par rapport à la longueur de courroie nominale. En effet une courroie trop courte à neuf nécessitera un effort mécanique et donc une consommation électrique plus importante. La procédure de correction prend donc en compte les effets de l'usure additionnés à une éventuelle disparité de la longueur de la courroie par rapport à la longueur nominale de courroie.

Le présent mode de réalisation fait appel aux informations suivantes que sont la position du bras 51 du tendeur 5 et l'intensité électrique dans le moteur de l'actionneur du tendeur. En comparant ici l'énergie nécessaire pour un déplacement donné avec une énergie nécessaire pour une courroie neuve, nous sommes capables de mesurer le module de Young de la courroie et donc de juger de son niveau d'usure. Il est souhaitable d'avoir une bonne qualité de mesure de la position du tendeur 5 et une mesure de courant de bonne qualité de manière à appréhender le niveau d'usure. De tels capteurs ou évaluateurs de position et de tels capteurs d'intensité sont largement disponibles sur le marché de manière à mettre en oeuvre un tel système.

Le présent mode de réalisation propose donc un pilotage du système de tension de la courroie qui est adaptatif du fait qu'il mesure l'élasticité de la courroie, estime l'usure de la courroie et met à jour les lois de pilotage du système de tension variable. Dans le présent exemple de réalisation, à chaque arrêt moteur le système mesure le courant consommé pour effectuer un déplacement contrôlé, ce qui permet de mesurer l'élasticité de la courroie et donc de remonter à son niveau d'usure. En variante, le système mesure un déplacement occasionné pour un effort donné, par exemple pour une intensité consommée à tension électrique constante. En variante encore, le tendeur 5 intègre un capteur d'effort entre son bras de pivot 51 et l'axe 53 du galet de manière à calculer directement l'effort appliqué par le galet sur la courroie 4. En comparant cet effort avec la position du galet, on détermine de la même manière qu'explicité ci-dessus l'allongement naturel de la courroie et donc son taux d'usure.

La mise en oeuvre de ce mode de réalisation ne demande pas de modification majeure de l'actionneur et de son module de pilotage et permet de garantir un niveau de qualité important sur la fonction transmission de puissance d'une façade accessoires. De plus, les ressources nécessaires en capacité de calcul sont minimes et n'exigent pas de redimensionnement du module de pilotage de l'actionneur du tendeur, notamment lorsque ce module de pilotage est constitué par l'unité de contrôle moteur.

## Revendications

1. Moteur à combustion de véhicule automobile comprenant un arbre moteur (1), un accessoire tournant électrique (2,3), une courroie (4) reliant l'arbre moteur (1) à l'accessoire tournant électrique (2,3), un tendeur de courroie (5) comprenant un actionneur (51,52,53) de positionnement du tendeur (5) de manière à exercer un appui sur la courroie (4) qui est variable selon le positionnement du tendeur de courroie (5), **caractérisé en ce qu'**il comporte un module pilotant l'actionneur (51,52,53) de positionnement du tendeur (5), le module étant configuré pour comparer un déplacement du tendeur (5) avec un effort produit par l'actionneur (51,52,53) pour générer un tel déplacement et pour déduire de cette comparaison un paramètre indicatif d'une élasticité de la courroie (4) et/ou un paramètre indicatif d'une longueur de la courroie (4).

2. Moteur selon la revendication précédente, **caractérisé en ce que** le pilotage de l'actionneur se fait en boucle ouverte.

3. Moteur à combustion selon la revendication 1 ou 2, **caractérisé en ce que** le module pilotant l'actionneur (51,52,53) de positionnement du tendeur (5) est configuré pour appliquer un déplacement prédéfini du tendeur (5), mesurer une consommation d'énergie électrique pour appliquer le déplacement prédéfini, et en déduire un paramètre indicatif de l'élasticité de la courroie (4) à partir de la consommation d'énergie électrique mesurée.

4. Moteur à combustion selon la revendication 3, **caractérisé en ce que** le module pilotant l'actionneur (51,52,53) de déplacement du tendeur (5) est configuré pour comparer la consommation d'énergie électrique pour appliquer le déplacement prédéfini avec une consommation électrique de référence et en déduire le paramètre indicatif de l'élasticité de la courroie (4).

5. Moteur à combustion selon l'une quelconque des revendications précédentes, **caractérisé en ce que** le module pilotant l'actionneur (51,52,53) de déplacement du tendeur (5) est configuré pour appliquer une tension de courroie (4) consistant en une valeur de consigne corrigée d'une valeur corrective, le module déduisant la valeur corrective d'un paramètre indicatif d'élasticité de la courroie (4) déduit de la comparaison entre le déplacement du tendeur (5) et l'effort produit par l'actionneur (51,52,53) pour générer un tel déplacement.

6. Moteur à combustion selon la revendication précédente, **caractérisé en ce que** le module pilotant l'actionneur (51,52,53) de déplacement du tendeur (5) est configuré pour déterminer un déplacement du tendeur (5) à appliquer pour atteindre une valeur de tension de courroie (4) consistant en la tension de consigne corrigée de la valeur corrective en déterminant le déplacement du tendeur (5) à appliquer par utilisation d'une table indiquant des valeurs de déplacement à appliquer en fonction de valeurs de tension souhaitées dans la courroie (4).

7. Moteur selon l'une quelconque des revendications précédentes, **caractérisé en ce qu'**il présente un module configuré pour comparer une valeur de déplacement à appliquer au tendeur (5) avec une valeur maximale, le module étant configuré pour émettre un signal de mise en garde du conducteur lorsque la valeur de déplacement à appliquer au tendeur (5) dépasse la valeur maximale.

8. Moteur selon la revendication précédente, **caractérisé en ce que** le signal de mise en garde du conducteur est un signal d'invitation à changer la courroie (4).

9. Moteur selon l'une quelconque des revendications précédentes, **caractérisé en ce que** le module pilotant l'actionneur (51,52,53) de déplacement du tendeur (5) est configuré pour déterminer un écart de dimensionnement de la courroie (4) à son installation sur le moteur par rapport à une dimension de courroie (4) attendue et le module est configuré pour mettre en oeuvre un déplacement du tendeur (5) qui est corrigé en fonction de l'écart de dimensionnement déterminé.

10. Moteur selon l'une quelconque des revendications précédentes, **caractérisé en ce que** le tendeur (5) comporte un bras rotatif (51) et un galet (53) porté par le bras rotatif (51).

11. Moteur selon l'une quelconque des revendications 1 à 9, **caractérisé en ce que** le tendeur est un tendeur à mouvement rectiligne.

12. Moteur selon l'une quelconque des revendications précédentes, **caractérisé en ce que** le module pilotant l'actionneur (51,52,53) de déplacement du tendeur (5) est configuré pour piloter des déplacements du tendeur (5) vers des positionnements définissant une plage de déplacements possibles qui est continue.

Figure unique

Europäisches
Patentamt

European
Patent Office

Office européen
des brevets

# RAPPORT DE RECHERCHE EUROPEENNE

Numéro de la demande

EP 14 16 4905

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 03/036133 A2 (GATES CORP [US]) 1 mai 2003 (2003-05-01) * figures 1,2 * ----- | 1-4,10, 11 | INV. F16H7/12 F16H7/14 |
| X | WO 2004/061333 A1 (GATES CORP [US]) 22 juillet 2004 (2004-07-22) * figures 7,9 * ----- | 1-12 | |
| X | US 2005/124447 A1 (MESSAGE OLIVIER [FR] ET AL) 9 juin 2005 (2005-06-09) * alinéas [0008], [0009], [0010] * ----- | 1 | |
| A | WO 2005/019695 A1 (INA SCHAEFFLER KG [DE]; HAENSEL TINO [DE]) 3 mars 2005 (2005-03-03) * le document en entier * ----- | 1-12 | |

DOMAINES TECHNIQUES
RECHERCHES (IPC)

F16H
F02B

Le présent rapport a été établi pour toutes les revendications

| Lieu de la recherche | Date d'achèvement de la recherche | Examinateur |
|---|---|---|
| Munich | 3 juin 2014 | Hassiotis, Vasilis |

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 14 16 4905

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-06-2014

| Document brevet cité au rapport de recherche | | Date de publication | Membre(s) de la famille de brevet(s) | | Date de publication |
|---|---|---|---|---|---|
| WO 03036133 | A2 | 01-05-2003 | AR | 037033 A1 | 20-10-2004 |
| | | | AT | 370355 T | 15-09-2007 |
| | | | AT | 400749 T | 15-07-2008 |
| | | | AT | 464493 T | 15-04-2010 |
| | | | AU | 2002348416 B2 | 15-06-2006 |
| | | | BR | 0213457 A | 10-05-2005 |
| | | | CA | 2462800 A1 | 01-05-2003 |
| | | | CN | 1633566 A | 29-06-2005 |
| | | | DE | 60221871 T2 | 30-04-2008 |
| | | | EP | 1438521 A2 | 21-07-2004 |
| | | | EP | 1564440 A2 | 17-08-2005 |
| | | | EP | 1881232 A2 | 23-01-2008 |
| | | | ES | 2289158 T3 | 01-02-2008 |
| | | | ES | 2307105 T3 | 16-11-2008 |
| | | | HU | 0500243 A2 | 30-05-2005 |
| | | | JP | 4251985 B2 | 08-04-2009 |
| | | | JP | 2005507064 A | 10-03-2005 |
| | | | KR | 20040048979 A | 10-06-2004 |
| | | | MX | PA04004912 A | 12-11-2004 |
| | | | TR | 200400872 T2 | 21-12-2004 |
| | | | TW | 546447 B | 11-08-2003 |
| | | | US | 2003083803 A1 | 01-05-2003 |
| | | | WO | 03036133 A2 | 01-05-2003 |
| WO 2004061333 | A1 | 22-07-2004 | AT | 367544 T | 15-08-2007 |
| | | | AU | 2003297008 A1 | 29-07-2004 |
| | | | BR | 0317302 A | 08-11-2005 |
| | | | CA | 2508352 A1 | 22-07-2004 |
| | | | CN | 1726361 A | 25-01-2006 |
| | | | DE | 60315071 T2 | 10-04-2008 |
| | | | EP | 1573230 A1 | 14-09-2005 |
| | | | ES | 2288227 T3 | 01-01-2008 |
| | | | JP | 4245564 B2 | 25-03-2009 |
| | | | JP | 2006509986 A | 23-03-2006 |
| | | | KR | 20050091730 A | 15-09-2005 |
| | | | RU | 2296896 C2 | 10-04-2007 |
| | | | TW | I253495 B | 21-04-2006 |
| | | | US | 2005192142 A1 | 01-09-2005 |
| | | | WO | 2004061333 A1 | 22-07-2004 |
| US 2005124447 | A1 | 09-06-2005 | AT | 306627 T | 15-10-2005 |
| | | | DE | 60206648 D1 | 17-11-2005 |
| | | | DE | 60206648 T2 | 06-07-2006 |
| | | | EP | 1444452 A1 | 11-08-2004 |
| | | | FR | 2832201 A1 | 16-05-2003 |
| | | | JP | 4298508 B2 | 22-07-2009 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 14 16 4905

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-06-2014

| Document brevet cité au rapport de recherche | Date de publication | Membre(s) de la famille de brevet(s) | Date de publication |
|---|---|---|---|
| | | JP 2005509811 A | 14-04-2005 |
| | | US 2005124447 A1 | 09-06-2005 |
| | | WO 03042577 A1 | 22-05-2003 |
| WO 2005019695 A1 | 03-03-2005 | DE 10337222 A1 | 17-03-2005 |
| | | EP 1654480 A1 | 10-05-2006 |
| | | JP 2007501910 A | 01-02-2007 |
| | | KR 20060073594 A | 28-06-2006 |
| | | US 2006178240 A1 | 10-08-2006 |
| | | WO 2005019695 A1 | 03-03-2005 |

EPO FORM P0460

Pour tout renseignement concernant cette annexe : voir Journal Officiel de l'Office européen des brevets, No.12/82